# EUROPÄISCHE PATENTSCHRIFT

(11) **EP 0 421 287 B1**
(45) Veröffentlichungstag und Bekanntmachung des Hinweises auf die Patenterteilung: **27.04.1994**
(21) Anmeldenummer: 90118634.6
(22) Anmeldetag: 28.09.1990
(51) Int. Cl.: F16J 15/46, F16L 17/10, E06B 7/23

(54) **Durch Druck aktivierbares Hohlprofil**
Hollow body set going by pressure
Corps creux actionné par pression

(30) Priorität: 05.10.1989 DE 3933249
(43) Veröffentlichungstag der Anmeldung: 10.04.1991
(73) Patentinhaber: Continental Aktiengesellschaft, 30165 Hannover (DE)
(72) Erfinder: Bethge, Michael, Dipl.Ing., D-3000 Hannover 71 (DE)

(56) Entgegenhaltungen:
- DE-C- 1 166 154
- DE-U- 8 806 085
- GB-A- 1 348 886
- US-A- 3 222 076
- AUTOMOTIVE ENGINEERING, Band 96, Nr. 7, Juli 1988, Seiten 33-38, Warrendale, US; "Novel sealing elements from elastomers"

## Beschreibung

Die Erfindung betrifft ein pneumatisch oder hydraulisch beaufschlagbares Hohlprofil aus elastomerem Werkstoff gemäß dem Oberbegriff des Patentanspruchs 1.

Ein derartiges Hohlprofil, wie es aus dem Dokument DE-U-8.806.085 bekannt ist, dient beispielsweise als Verschlußklappe von Wandöffnungen oder rohrförmigen Kanälen, und es kann als Spaltdichtung von Tür- und Fensteröffnungen verwendet werden. Es ist dazu in zwei stabile Endstellungen ein- und ausfaltbar.

Aufgabe der vorliegenden Erfindung ist es, ein solches Hohlprofil zu schaffen, das leicht auch in schwer zugängliche Spalte oder Fugen eingelegt und einfach in Dichtposition gebracht werden kann und das - auch über lange Zeiträume - eine höhere Dichtwirkung gewährleistet.

Gelöst wird diese Aufgabe durch ein gattungsgemäßes Hohlprofil, das die im kennzeichnenden Teil des Patentanspruchs 1 genannten Merkmale aufweist. In den Patentansprüchen 2 bis 5 sind bevorzugte Weiterbildungen der Erfindung gekennzeichnet, und im Patentanspruch 6 ist eine besonders vorteilhafte Ausführungsform angegeben.

Durch die vorliegende Erfindung wird ein Hohlprofil geschaffen, das zusammengefaltet leicht und einfach auch in schwer zugängliche Fugen, Spalte oder dergleichen eingesetzt werden kann, da seine dichtenden Schwenkbereiche mit der eingebetteten Dicht- und Klebemasse dann eingefaltet und somit gegen mechanische Beschädigungen geschützt sind. Nach dem Positionieren des zusammengefalteten Hohlprofils werden die Schwenkbereiche mit einem Überdruckimpuls nach außen gefaltet und die im Bereich des etwa mittig zwischen den Schwenkbereichen verlaufenen Knickgelenks angeordnete Dicht- und Klebemasse wird kräftig gegen die gegenüberliegende Fugen- oder Spaltwandung gepresst. Die Dicht und Klebemasse erzeugt dabei eine zusätzliche sichere hohe Dichtwirkung. Da die Schwenkbereiche relativ weich und elastisch sind, können mit dem erfindungsgemäßen Hohlprofil auch Fugenbreiten mit größeren Toleranzabweichungen sicher abgedichtet werden.

In einer besonders vorteilhaften Ausführungsform der Erfindung sind beiderseits an die Profilbasis zwei entgegengesetzt ausgerichtete schlauchartige Hohlkörper mit entsprechenden Schwenkbereichen angeformt, wobei diese Schwenkbereiche einander entgegengesetzt in stabile Endstellungen ein- und ausfaltbar sind und im eingefalteten Zustand in den Bereichen ihrer etwa mittigen Knickgelenke ringförmig umlaufende nach außen weisende Nuten bilden, die mit einer Dicht und Klebemasse versehen sind.

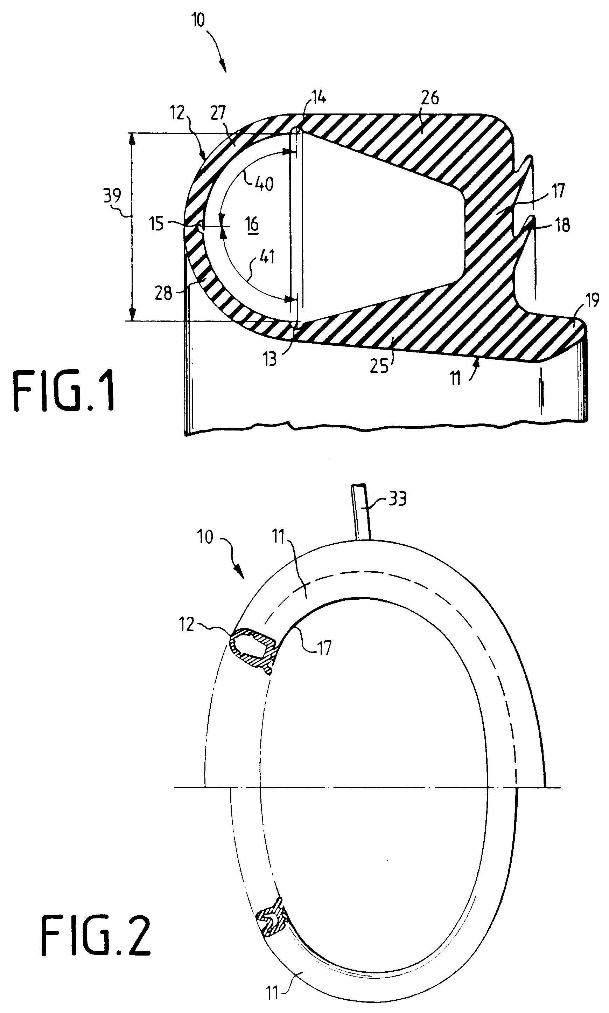

Die Erfindung ist in der angefügten Zeichnung beispielsweise dargestellt und wird nachfolgend näher beschrieben; es zeigen:
**Figur 1** den Querschnitt durch ein nicht erfindungsgemäßes Hohlprofil mit einfaltbaren Schwenkbereichen;
**Figur 2** eine Ansicht eines ringförmigen pneumatisch entfaltbaren Hohlprofils mit Querschnittsdarstellungen nach Figur 1, und zwar in der oberen Hälfte der Figur im ausgefalteten Zustand und in der unteren Hälfte der Figur im eingefalteten Zustand;
**Figur 3** ein erfindungsgemäßes Hohlprofil im eingefalteten Zustand während des Einfügens in eine abzudichtende Fuge;
**Figur 4** das eingefügte Hohlprofil nach Figur 3 in entfalteter dichtender Position;
**Figur 5** ein erfindungsgemäßes Hohlprofil mit zwei einander entgegengesetzt axial gerichteten Dichtbereichen im eingefalteten Zustand;
**Figur 6** ein durch Druck aktiviertes Hohlprofil nach Figur 5 in ausgefalteter dichtender Position;
**Figur 7** ein erfindungsgemäßes eingefaltetes Hohlprofil mit zwei einander entgegengesetzt gerichteten Dichtbereichen zur Dichtung in radialer Richtung während des Einfügens ohne Kontakt mit den Dichtflächen;
**Figur 8** das Hohlprofil nach Figur 7 in eingefügter radial dichtender Position mit axialen Dichtungssitzen;
**Figur 9** ein Hohlprofil nach den Figuren 5 und 6 mit einer Zentrierung an den Dichtflächen
Das in der Fig. 1 dargestellte Hohlprofil 10 besteht im wesentlichen aus einem Grundkörper 11 und einem Dichtungsteil 12. Der Grundkörper 11 ist U-förmig mit Seitenbereichen 25 und 26 versehen, die einstückig angeformt sind. Unmittelbar an die Seitenbereiche 25 und 26 schließen sich auf der dem Grundkörper 11 abgewandten Seite Schwenkbereiche 27 und 28 an, die einen geschlossenen Hohlraum 16 umgeben. Auf der der Basis 17 des Grundkörpers 11 abgewandten Seite gehen die Seitenbereiche 25 und 26 an Sollknickstellen 13 und 14 einstückig in Schwenkbereiche 27 und 28 über. Bei der dargestellten Ausführungsform sind die sich anschließenden Schwenkbereiche 27 und 28 symmetrisch ausgebildet und weisen zwischen sich ein mittiges Knickgelenk 15 auf. Im Bereich des Knickgelenks 15 ist auf die Schwenkbereiche 27 und 28 eine Dicht- und Klebemasse 21 aufgebracht.

Die Sollknickstellen 13, 14 und das Knickgelenk 15 sind als zum Hohlraum 16 hin halbkreisförmige Nuten ausgebildet, an denen die Materialstärke gegenüber der übrigen Wandungsstärke auf etwa 30 bis 80 % verringert ist. Die Schwenkbereiche 27 und 28 sind kreisbogenförmig ausgebildet und bilden zusammen etwa einen Halbkreis. Diese halbkreisförmigen Schwenkbereichlängen 40 und 41 sind länger als der Abstand 39 zwischen den Sollknickstellen 13 und 14 an den Übergängen zu den Seitenbereichen 25 und 26 und, wie die Fig. 2 zeigt, ist das Hohlprofil 10 mit einem Pneumatikanschluß 33 versehen und durch Ausfalten der Schwenkbereiche 27 und 28 in seiner Querrichtung variabel.

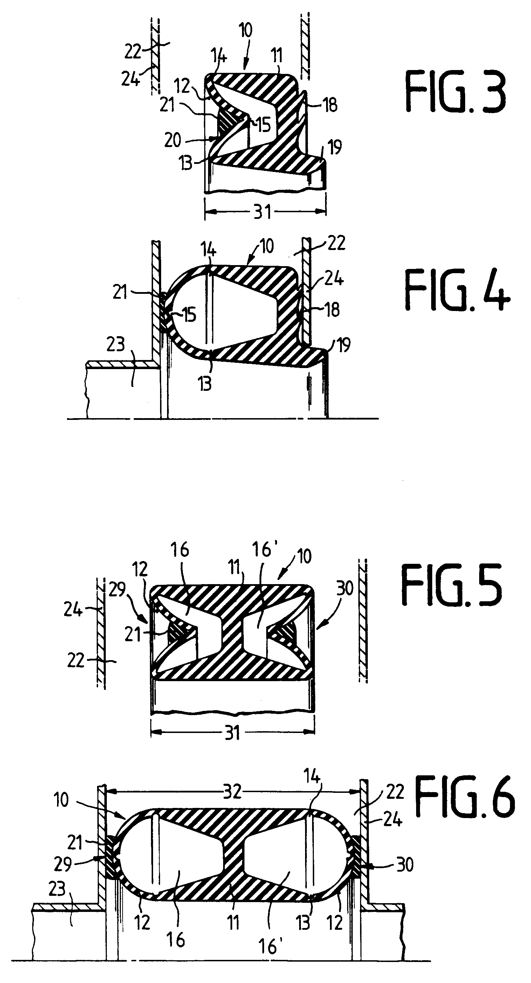

Wie in der Fig. 3 dargestellt ist, sind die Schwenkbereiche 27 und 28 in den Sollknickstellen 13 und 14 nach innen, d.h., in Richtung auf die Grundkörperbasis 17, eingefaltet. Die Schwenkbereiche 27 und 28 bilden dabei an ihren Außenseiten eine ringförmig umlaufende Nut 20, in die eine klebende, plastische Dichtmasse 21 eingelegt ist, mit der das Hohlprofil 10 dauerhaft in seiner Lage fixiert werden kann.

Um eine bessere Fixierung und Zentrierung des Hohlprofils 10 im Einbauzustand zu erreichen, ist die Basis 17 des Grundkörpers 11 auf der den Seitenbereichen 25 und 26 entgegengesetzten Außenseite mit Haltelippen 18 und einer Anschlagkante 19 versehen. Mit diesen Haltelippen 18 und der Anschlagkante 19 kann das Hohlprofil 10, wie die Fig. 4 zeigt, an die Wandung 24 einer abzudichtenden Fuge 22 zur zentrierten Anlage gebracht werden.

In der in der Fig. 4 dargestellten Dichtposition ist das Hohlprofil durch einen durch den Pneumatikanschluß 33 eingeleiteten Überdruckimpuls ausgefaltet und liegt einerseits mit den Haltelippen 18 und andererseits mit der den Schwenkbereichen 27 und 28 zugeordneten Dichtmasse 21 an den Wandungen 24 einer abzudichtenden Fuge 22 an und dichtet diese Fuge 22 gegenüber einem nicht näher dargestellten Kanal 23 ab.

Das Dichtungsteil 12 des Hohlprofils 10 befindet sich nach der pneumatischen Entfaltung in einer stabilen Lage. Eine weitere, anhaltende Druckbeaufschlagung ist deshalb nicht erforderlich, und der Pneumatikanschluß 33 kann nach dem Entfalten der Schwenkbereiche 27 und 28 entfernt und die Hohlkammer 16 unter atmosphärischen bzw. Umgebungsdruck belassen werden.

Um eine stabile Lage der Schwenkbereiche 27 und 28 sowohl im eingefalteten als auch im ausgefalteten Zustand zu sichern, ist es vorteilhaft, die Seitenbereiche 25 und 26 aus einem härteren Werkstoff als die Schwenkbereiche 27 und 28 zu fertigen. Durch eine derartige Werkstoffkombination sowie durch die oben beschriebenen Längenverhältnisse und die druckstabile Kreisbogenform ist gewährleistet, daß die Schwenkbereiche 27 und 28 des Hohlprofils 10 im eingefalteten wie im ausgefalteten Zustand eine stabile Lage einnehmen.

In der Fig. 5 ist ein Hohlprofil 10 dargestellt, bei dem an einem gemeinsamen Grundkörper 11 zwei einander entgegengesetzte Dichtbereiche 29 und 30 einstückig angeformt sind. Auch diese Dichtbereiche 29 und 30 bestehen aus in Sollknickstellen 13 und 14 nach innen einfaltbaren Schwenkbereichen 27 und 28, die im eingefalteten Zustand eine relativ kleine axiale Erstreckung 31 aufweisen, die kleiner als die lichte Weite 32 der abzudichtenden Fuge 22 ist.

Wie es in der Fig. 6 schematisch dargestellt ist, können die Hohlkammern 16 und 16' dieses doppelten Hohlprofils 10 mit ihren Dichtbereichen 29 und 30 ebenfalls mit einem Überdruckimpuls beaufschlagt und in Dichtposition entfaltet werden. Mit der Klebe- und Dichtmasse 21 wird dabei eine feste und dauerhafte Abdichtung der Fuge 22 geschaffen.

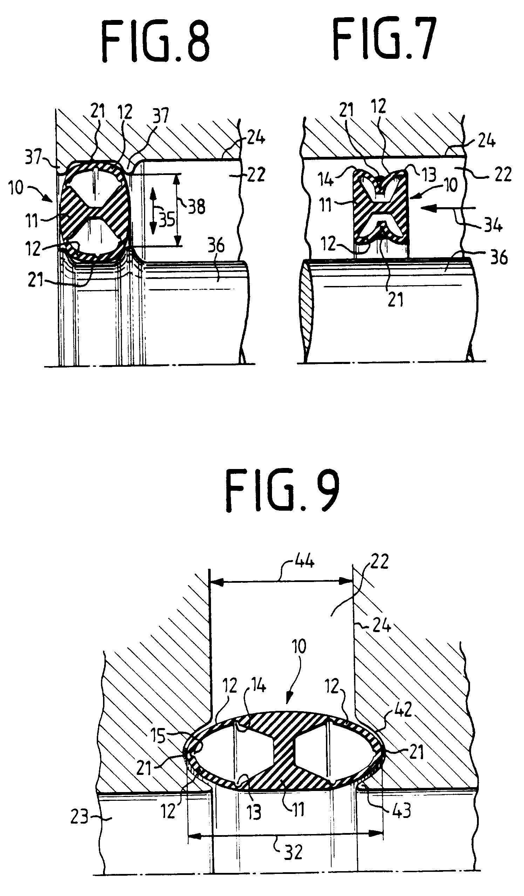

Bei der in der Figur 7 dargestellten Ausführung ist das ringförmige Hohlprofil 10 durch radial nach innen und radial nach außen weisende Dichtungsteile 12 in seinem Außen- und Innendurchmesser veränderbar. Im eingefalteten Zustand kann es in Montagerichtung 34 ohne Kontakt mit den Wandungen 24 der Fuge 22 bzw. der radialen Innenkontaktfläche 36 in seine Dichtposition eingefügt und dann entfaltet werden. Diese in der Fig. 8 dargestellte Dichtposition kann zusätzlich durch axiale Dichtungssitze 37 begrenzt werden.

Die axialen Dichtungssitze 37 weisen eine Sitzweite 38 auf, die etwa der Weite des Montageraumes 31 des Hohlprofils 10 im eingefalteten Zustand entspricht bzw. etwas größer ist. Das Hohlprofil 10 kann so ohne Kontakt mit den abzudichtenden Flächen 24 und 34 eingefügt werden. Nach Erreichen seiner Dichtposition werden die Hohlkammern 16 des Hohlprofils 10 über den in der Fig. 2 dargestellten Pneumatikanschluß 33 mit einem Druckimpuls beaufschlagt und in Entfaltungsrichtung 35 entfaltet.

Bei der in der Fig. 9 dargestellten Ausführung ist die Fuge 22 mit einer Lagebestimmungsnut 42 versehen, die als eine beidseitig axiale Auskehlung ausgeführt ist. In diese Lagebestimmungsnut 42 wird das Hohlprofil 10 nach dem Einfügen entfaltet, wobei die Dichtungsteile 12 an radial inneren Anlagen 43 anliegen. Die Dichtweite 32 ist dabei größer als die lichte Weite 44 der abzudichtenden Fuge 22.

## Patentansprüche

1. Pneumatisch oder hydraulisch beaufschlagbares Hohlprofil (10) aus elastomerem Werkstoff mit mindestens einem zwischen zwei stabilen Endstellungen aus- und einfaltbaren schlauchartigen Hohlkörper, dessen Hohlraum (16) von einer Profilbasis (11), zwei einstückig an die Profilbasis (11) angeformten Seitenbereichen (25,26) und über Sollknicklinien (13,14) einstückig mit den Seitenbereichen (25,26) verbundene, durch ein Knickgelenk (15) unterteilte Schwenkbereiche (27,28) umschlossen ist, wobei die Summe der Schwenkbereichlängen (40,41) größer ist als der Abstand (39) zwischen den Sollknickstellen (13,14), dadurch gekennzeichnet, daß das Hohlprofil als ein geschlossener Ring ausgebildet ist, dessen axiale oder radiale Erstreckung durch ein- bzw. ausfalten der Schwenkbereiche (27,28) in stabile Endstellungen veränderbar ist, und daß die Schwenkbereiche (27,28) im eingefalteten Zustand im Bereich des etwa mittigen Knickgelenks (15) eine ringförmig umlaufende nach außen weisende Nut (20) bilden, in die eine Dicht- und Klebemasse (21) eingebettet ist.

2. Hohlprofil nach Anspruch 1, dadurch gekennzeichnet, daß die Schwenkbereiche (27,28) im Axialschnitt kreisbogenförmig ausgebildet sind und zusammen etwa einen Halbkreis bilden.

3. Hohlprofil nach Anspruch 1 oder 2, dadurch gekennzeichnet, daß die Basis (17) des Grundkörpers (11) aus einem härteren Material als die Seitenbereiche (25, 26) ist.

4. Hohlprofil nach einem der Ansprüche 1 bis 3, dadurch gekennzeichnet, daß es mit einem entfernbaren Pneumatikanschluß (33) versehen ist.

5. Hohlprofil nach einem der Ansprüche 1 bis 4, dadurch gekennzeichnet, daß die Basis (17) des Grundkörpers (11) auf der den Seitenbereichen (25, 26) abgewandten Seite mit mindestens einer Anschlagkante (19) versehen ist.

6. Hohlprofil nach einem der Ansprüche 1 bis 4, dadurch gekennzeichnet, daß an die Basis (17) des Grundkörpers (11) zwei entgegensetzt ausgerichtete schlauchartige Hohlkörper mit Hohlräumen (16,16') angeformt sind, deren Schwenkbereiche (27,28) einander entgegengesetzt in stabile Endstellungen ein- und ausfaltbar sind.

## Claims

1. Pneumatically or hydraulically actuatable hollow profile (10), which is formed from elastomeric material and includes at least one hose-like hollow body, which is outwardly and inwardly bendable between two stable end positions, the cavity (16) of said hollow body being surrounded by a profile base (11), two lateral regions (25, 26) which are integrally formed on the profile base (11), and hinge-like regions (27, 28) which are integrally connected to the lateral regions (25, 26) via desired bend lines (13, 14) and are divided by means of a flexible hinge (15), the sum of the hinge-like region lengths (40, 41) being greater than the spacing (39) between the desired bend points (13, 14), characterised in that the hollow profile is configured as a closed ring, the axial or radial extension of such ring being variable as a result of the hinge-like regions (27, 28) being inwardly or outwardly bent into stable positions, and in that the hinge-like regions (27, 28), in the inwardly bent state, form an annularly circumferential, outwardly extending groove (20) in the region of the substantially central flexible hinge (15), a sealing and adhering substance (21) being embedded in said groove.

2. Hollow profile according to claim 1, characterised in that the hinge-like regions (27, 28) have an arcuate axial cross-section and together substantially form a semicircle.

3. Hollow profile according to claim 1 or 2, characterised in that the base (17) of the basic body member (11) is formed from a harder material than that of the lateral regions (25, 26).

4. Hollow profile according to one of claims 1 to 3, characterised in that it is provided with a removable pneumatic connection (33).

5. Hollow profile according to one of claims 1 to 4, characterised in that the base (17) of the basic body member (11) is provided with at least one abutment edge (19) on the side remote from the lateral regions (25, 26).

6. Hollow profile according to one of claims 1 to 4, characterised in that two oppositely aligned, hose-like hollow bodies are formed to fit on the base (17) of the basic body member (11) and are provided with cavities (16, 16'), the hinge-like regions (27, 28) being inwardly and outwardly bendable into stable end positions in opposite directions relative to each other.

## Revendications

1. Profilé creux (10) pouvant être chargé pneumatiquement ou hydrauliquement, réalisé en un matériau élastomère et possédant au moins un corps creux en forme de tuyau, qui peut être déployé et replié entre deux positions d'extrémité stables et dont la cavité (16) est entourée par une base (11) du profilé, deux parties latérales (25, 26) formées d'un seul tenant sur la base (11) du profilé et reliées d'un seul tenant aux parties latérales (25, 26) par l'intermédiaire de lignes de pliage imposé (13, 14), et subdivisées par une articulation (15), la somme des longueurs (40, 41) des parties pivotantes étant supérieure à la distance (32) entre les zones de pliage imposé (13, 14), caractérisé en ce que le profilé creux est réalisé sous la forme d'un anneau fermé, dont l'étendue axiale ou radiale peut être modifiée au moyen du pliage ou du déploiement des parties pivotantes (27, 28) dans des positions d'extrémité stables, qu'à l'état replié, les parties pivotantes (27, 28) forment, au voisinage de l'articulation approximativement médiane (15), une gorge annulaire circonférentielle (20) tournée vers l'extérieur et dans laquelle est logée une masse d'étanchéité adhésive (21).

2. Profilé creux selon la revendication 1, caractérisé en ce que les parties pivotantes (27, 28) sont réalisées avec une forme en arc de cercle en coupe axiale et forment conjointement approximativement un demi-cercle.

3. Profilé creux selon la revendication 1 ou 2, caractérisé en ce que la base (17) du corps de base (11) est réalisée en un matériau plus dur que les parties latérales (25, 26).

4. Profilé creux selon l'une des revendications 1 à 3, caractérisé en ce qu'il comporte un raccord pneumatique amovible (33).

5. Profilé creux selon l'une des revendications 1 à 4, caractérisé en ce que la base (17) du corps de base (11) comporte, sur son côté tourné à l'opposé des parties latérales (25, 26), au moins une arête de butée (19).

6. Profilé creux selon l'une des revendications 1 à 4, caractérisé en ce que sur la base (17) du corps de base (11) sont façonnés deux corps creux en forme de tuyaux, qui sont orientés en des sens opposés et comportent des cavités (16, 16') et dont les parties pivotantes (27, 28) peuvent être repliées et déployées, en des sens réciproquement opposés, dans des positions d'extrémité stables.
